# EUROPEAN PATENT SPECIFICATION

(11) **EP 1 016 579 B1**
(45) Date of publication and mention of the grant of the patent: **10.12.2008**
(21) Application number: 99850216.5
(22) Date of filing: 27.12.1999
(51) Int. Cl.: B62B 3/06, B60L 11/18

(54) **Method and device for programming of trucks**
Verfahren und Vorrichtung zum Programmieren von Gabelstaplern
Méthode et dispositif pour programmer des transpalettes

(30) Priority: 30.12.1998 SE 9804596
(43) Date of publication of application: 05.07.2000
(73) Proprietor: Toyota Industries Sweden AB, 595 81 Mjölby (SE)
(72) Inventor: Précenth, Gert, 59553 Mjölby (SE); Stenberg, Kurt-Ove, 59544 Mjölby (SE)
(74) Representative: Axell, Kristina

(56) References cited:
- EP-A- 0 360 870
- DE-A- 4 128 306
- DE-A- 19 603 648
- US-A- 5 687 081

## Description

Since trucks are often used by different persons and for different types of work it is sometimes reasonable to adapt the truck to different circumstances and persons, for instance by changing maximum travel speed, lifting speed etc, high loads must be handled more carefully and slower by unexperienced operators that also have to drive slower, which is also the case on uneven ground. In order to make these reprogrammings of the truck it is known to provide the truck with connection means for the connecting to outer means, that for instance can be constituted by a computer. It is also known to provide trucks with special controls for the programming. The possibility to program however means an additional cost. For larger trucks this is no problem since they can take the cost for the required extra equipment. This is however not the case for smaller trucks where the cost hunt is a hindrance for these in themselves desirable possibilities. It is conceivable to have the additional equipment in the shape of feed equipment or card reading equipment, that is only added on certain machines. This however leads to unreasonable costs for these machines and means also that it becomes difficult or impossible to refurnish unequipped machines. In other words today a satisfactory solution for smaller machines as for instance tiller trucks is missing.

EP-A-0 360 870 discloses a method according to the preamble of claim 1 and a battery powered vehicle comprising a control and display system by which the operator can operate an electric control device built in the vehicle body to change the operational characteristic of the vehicle. Data, such as respective setting values or parameters of the operational characteristic of the vehicle, a cumulative total of the hours operated by the vehicle, and a cumulative total of the distance travelled by the vehicle, is displayed on a display panel.

The object of the invention is to define a solution to the above problem. The solution in accordance with the invention is that no extra equipment at all is mounted, but possibly a display that is often required for other reasons and that may be very simple. For the programming controls are used that all trucks are equipped with anyhow. Preferably the control for the signal and the drive control are chosen since these controls always exist when it is the question of an electrically driven truck. In this way a total of three different signals to the electronic of the truck is obtained since the speed or drive control has signals both for forward and backward movement.

With the invention it is at tiller trucks possible to browse the parameter settings and change those that are to be changed. The parameters and their settings can be indicated by a simple code on a simple but well observable display on the truck handle. Since controls are used that are there anyhow the cost increase if any will be a minimum.

By the invention also trucks that originally lack possibilities for reprogramming can be furnished with this. Since further the cost for the electronic that is required to enable reprogramming is very small the additional cost will be low and it is consequently easy to vary the equipment of the truck and to refurnish it at a later upgrading.

Since the entering into the program mode or parameter setting of the truck by mistake is unwanted the machine should preferably have two distinct separate work modes, one for use and one for programming, where shifting can not take place with less than the truck being shut off. In this way it becomes impossible to slip over from working mode to programming mode or vice versa.

In order to enter the programming mode for instance the signal control can be depressed at the same time as the key is turned for the truck. In order to start the truck for work one can simply avoid depressing the signal control (button).

In particular for the case that the logic unit of the truck is located in the handle as well as the display the total cost can be kept low since the display can be arranged more or less directly in the proximity of the logic card.

At the use of discrete sensor elements for drive control a sensor can be chosen corresponding to a certain speed forward stepping forward and another corresponding certain speed for the sensing (in this mode) so that a sufficient distance is obtained as well as a simple provision of signals to the electronic when this is in a programming mode

Within the word programming mode not only the setting of different parameters but also function control and error searching can be included, as well as any settings or checking that is done via electronics. Likewise the programming mode can be divided into several different modes, alternatively one can conceive that the truck apart from the work mode has several programming or electronically accessible modes, as for instance one mode for an error log.

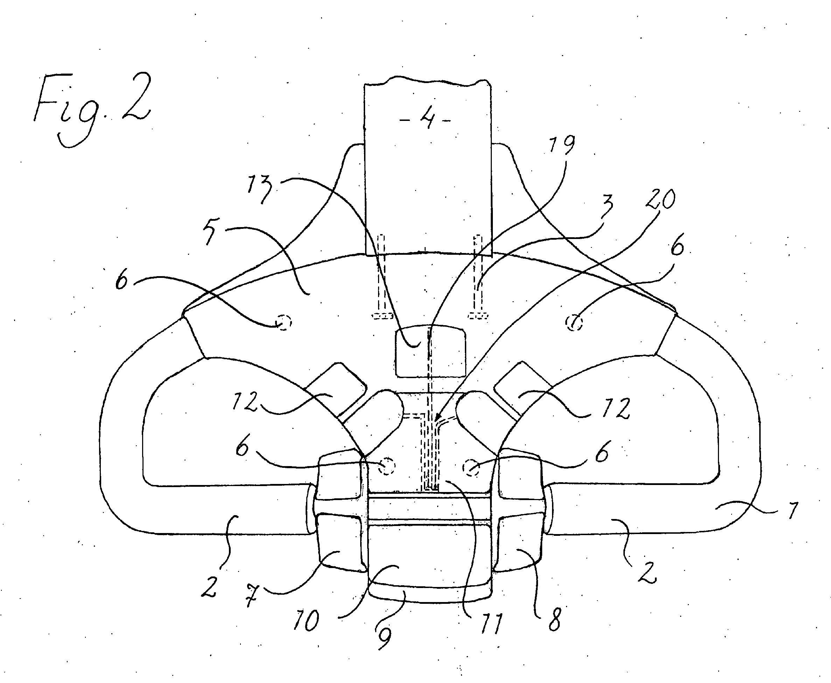

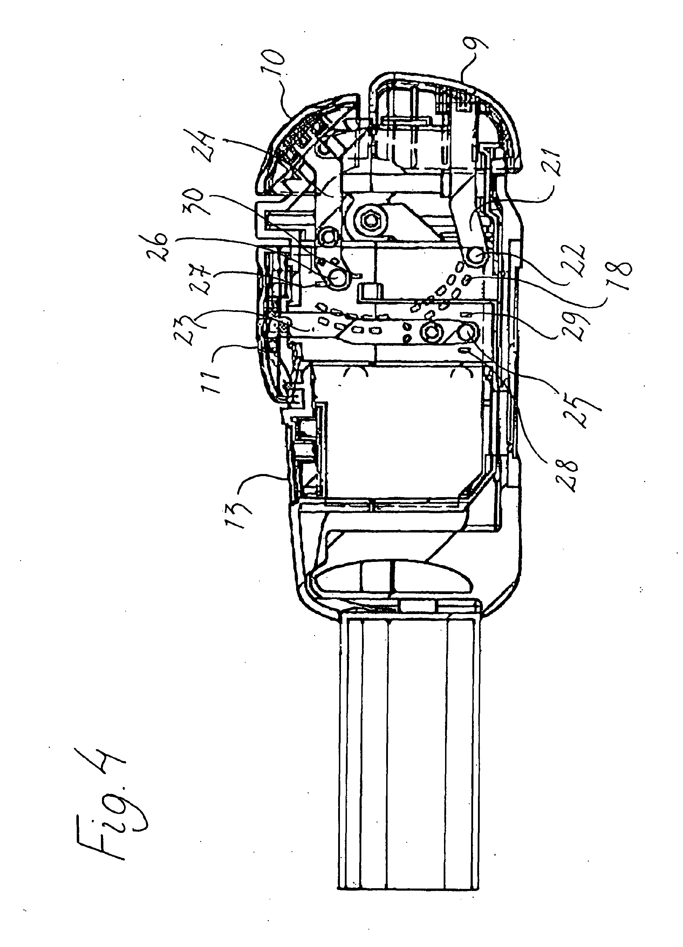

Additional advantages and characteristics of the invention are apparent from the following description of an embodiment shown in the enclosed drawings. In these fig. 1 shows a tiller truck in its entirety, fig 2 its handle seen from above, fig 3 and 4 vertical longitudinal sections through the handle and fig 5 one of the speed controls.

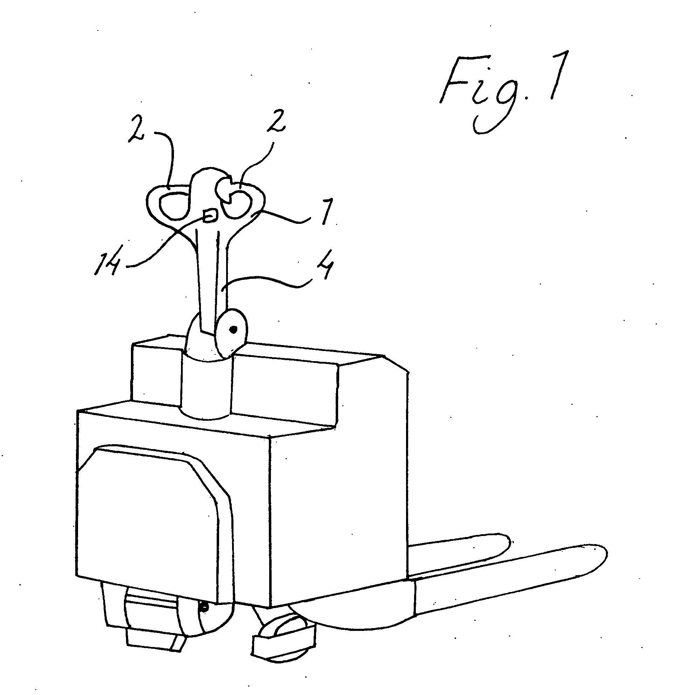

The tiller truck shown in fig 1 includes a drive and power unit from which the load forks project. In the drive and power unit the large batteries of the truck are arranged as well as a driving and steering wheel that is driven by a motor that is fed with electricity via a chopper that for instance provide currents in the shape of short pulses via tyristors. In the drive and power unit a hydraulic pump is provided with its electrically driven motor and hydraulic valves for the lifting movements. With the driving and steering wheel a tiller 4 is further connected, that is hinged height wise but pivotable together with the wheel in the drive and power unit for steering of the truck. In the outer end of the tiller a tiller handle is fastened and normally the operator leads the truck behind himself or steers it in front of himself.

The handle contains a supporting structure 1 provided with two grip handles 2 and is by means of bolts 3 fastened to the tiller 4 of the truck. On the frame 1 of the handle a control panel is fastened with four screws 6. The panel 5 is provided with drive controls 7 and 8 for left and right hand respectively for control of travel direction and speed by turning.

The control panel further includes a safety control or belly-button 9, a control 10 for lifting and lowering of the forks , a control 11 for lifting and lowering of the support legs and two buttons for the horn, one for the left and one for the right hand. On the top side the handle is further provided a display 13 and on the bottom side there is keyboard 14 for authority verification.

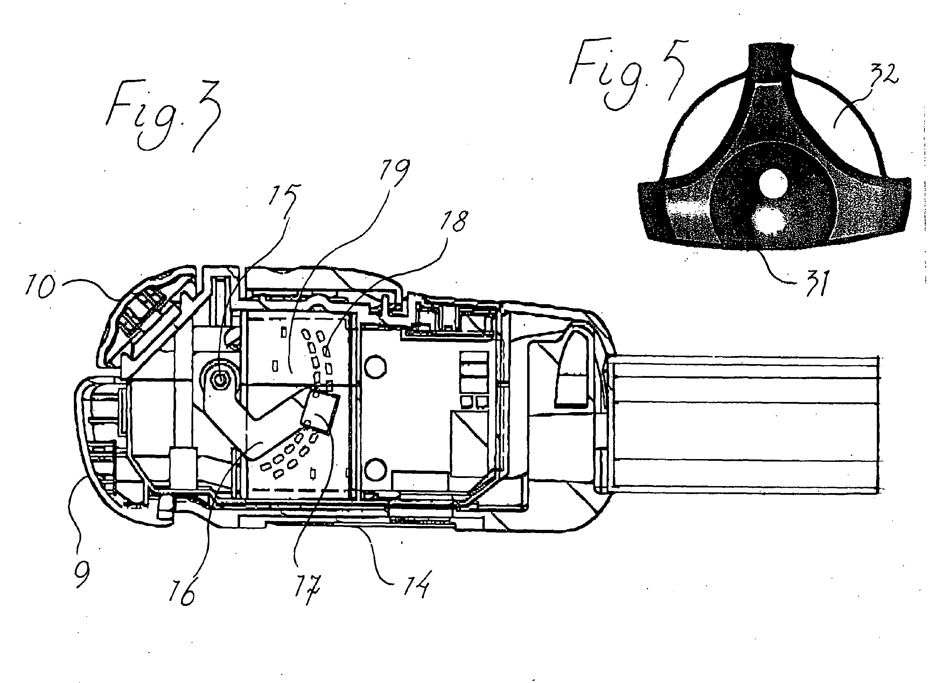

The drive controls 7 and 8 has the shape that is shown in fig 5 and differ from conventional drive controls by a downwards facing only slightly curved side 31. The operator can when he walks forwards with the truck following after him turn the palm of the hand upwards with the index finger in contact with the downwards facing only slightly curved side of the control, while the thumb may grip into the upper recess 32 turned towards the operator.In this way the ergonomics and the possibility of the operator to vary the manner in which the drive controls are actuated improve, so that the comfort is increased at the same time as the risk of wear damages is reduced.

The drive controls 8 and 7 for right and left hand respectively are connected to an axle 15 journaled in a lower bowl shaped part of the control panel 5. On the axle 15 an arm 16 is arranged provided with a magnet 17 in the outer end. At actuation of one of the drive controls 7 or 8 this magnet 17 is swung upwards or downwards from the neutral rest position dependent on desired direction of movement and speed respectively. The magnet that moves in a vertical plane at this sweeps along a curved double path of separate Hall sensors 18 arranged on a printed circuit 19. Via a serial cable the printed circuit card is in contact with the drive and power unit of the truck. The printed circuit card is in the proximity of the speed control arranged in a narrow vertical receiving space or slot 20 in the bottom part of the housing and is in this way well protected, while the magnet moves on the outside of the slit wall, the magnet or any of the other moveable parts can thus not harm the Hall sensors or the printed circuit card even at greater play. The magnet field however has no difficulty in reaching through the walls of the receptacle and influence the Hall-elements. The Hall elements 18 serve as sensors or switches and the further forward (towards the truck) arranged logic is programmed so that it via the serial cable and an electronically controlled chopper between battery and drive motor can control a successive increasing feed of more drive power at increased deflection of the drive control. The axle is further influenced by a spring device that when uninfluenced return the speed control to its 0-position. Since the Hall sensors 18 are arranged in double rows a large number of individual control levels are obtained (nine in each direction).

Through the used sensor technique the possibility is obtained to have many regulator steps at a low cost and it is easy to adapt the truck speed to the walking velocity of individual operators. In order to allow sufficient precision of the speed steps at low speed the steps are smaller at low speeds than those at the higher speeds. In order additionally to eliminate the feeling of jerkiness at the turning of the drive control the electronics is programmed to give a stepless increase, which is obtained by a successive and stepless increase to this value as the control is turned to the next step. By letting the rapidity in this successive and stepless increase be controlled by how swift the control movement is the sense of sluggishness that otherwise might be felt at increase is avoided. At a swift increase the ramping will be steep and no delay is felt and at a slow increase the ramping is slow so that the operator is not surprised by any sudden increase in velocity. This adaptive ramping may to its inclination be controlled by the time that passes between the activation of the different sensors at increase and decrease. Although this leads to a delay corresponding to the time between the reaction of these sensors this time is entirely negligible in relation to the slowness of the truck due to its weight.

As an alternative to the above use of Hall-elements for contact free control one can consider the use of photosensitive elements together with light guides or reflectors and light emitting diodes or some other light source.

The belly or security button has as its purpose to prevent the operator from being squeezed between the truck and a wall. Should this occur and the belly button is pushed in this is on an inwardly extending arm 21 provided with a magnet 22 that at this movement is moved so that it will influence one or several of the Hall elements that belong to the speed control, the magnet 22 however being located on the other side of the circuit card and its respective slot in relation to the magnet of the speed control. The magnet is as is apparent in level with the Hall-element that corresponds to the next fastest speed away from the operator, that is movement in the fork direction. The logic of the printed circuit card is at this programmed to activate an anti squeeze operation where the truck moves away from the operator until the button is released and has returned to its initial position.

The logic is further so programmed that if it detects a sensor fault that could mean that the sensor or sensors that are to react on a pushing of the belly-button might be non-functioning further use is blocked, or only allowed with limitations, as for instance that the truck can only be driven with a reduced speed and/or that the truck can not be driven towards the operator.

Also the controls located on top of the handle are provided with arms 23, 24 and magnets 25, 26 so that a tilting movement result in Hall-elements 27-30 being influenced initiating movements up and down for forks and support legs respectively.

For the above listed controls the use of Hall elements on the printed circuit card is particularly simple to arrange since the controls are located centrally in the handle in the same manner as the printed circuit card. If so desired one could consider also to arrange the signal controls with an extension and a magnet for a corresponding activation but in the shown case the signal controls are conventional electric contacts and connected by means of electric leads. Since the sensors belonging to the different movement controls are constituted by Hall elements sitting directly on the printed circuit card the possibility of electromagnetic pulses coming from the outside to interfere will become very small since the leads are short and centrally placed and also can be metal enclosed.

The slot or channel 20 receiving the printed circuit card 19 in the panel housing is narrow where the Hall sensors are situated to allow magnet influence for respective control but is widened in the end facing the truck. In this wider end the capsules containing the processors, memories etc are arranged, as well as the connections to the serial cable 31, keyboard and display.

The display 13 arranged on top of the control panel 5 is connected to the printed circuit card 19. The display is used at malfunction control and parameter setting without external means or additionally on the truck arranged means, but solely with the controls that the truck is normally provided with. In order to conduct an error control or parameter setting respectively one of the signal buttons is depressed at the same time as the truck is turned on via the authority verification described in more detail below alternatively with a key. This result in the logic of the truck entering into what we could call a check mode with all working functions inactive. An E is shown on the display corresponding to an Error log mode. A continued depressing result in the display of a P corresponding to parameter setting mode and a releasing of the signal button causes it to stay in the shown mode.

In the E-mode after a releasing of the signal button the latest error or malfunction that has been registered is displayed in the form of an error code alternating with the time (drive time) at which the error occurred. By means of the speed control one can then move back and forward in time with error codes and corresponding times being displayed. To get out of the error log mode the truck is turned off.

If by a somewhat longer depression of the signal button a P is shown on the display and the button is released at this the parameter setting mode has been entered and by actuation of the drive control corresponding to movement from or against the operator the display moves up or down in the list of parameters. When the parameter that is to be altered has been reached in this way the signal button is depressed resulting in the display of the parameter value, which can be altered up or down by means of the drive control. When the desired value has been reached this is confirmed by a depressing of the signal button, whereafter with the drive control the next parameter that is to be changed can be chosen. In order to exit the parameter setting mode the truck is turned off.

Examples of parameters etc that may be adjusted are allowed acceleration and retardation, height and load limitations, what one wants to receive warnings about, as battery voltage, load weight, height indication, if the indication is to be in kilograms, pounds, meters, feet etc.

The shift back from the error mode or parameter setting mode to drive mode is by turning the machine off. By not depressing any of the signal buttons at the starting the machine starts in drive mode with the possibly new parameter settings.

As is realized a possible change of the number of modes includes only changes in the electronics and a possible increase in the number of modes and check possibilities can thus be achieved with small costs, whether it is a question of further developments in production or refurnishing of a truck.

On the bottom side of the handle a keyboard is arranged for authority verification and starting and turning off of the truck instead of by means of a key. The keyboard is connected to the printed circuit card and arranged on the bottom of the housing of the control panel bottom part. The chassis of the handle is here provided with a corresponding recess so that the keys can be actuated. In this way the keyboard will at the same time be recessed and well protected by the sturdy chassis. The key board includes figure keys and a green key for start and a red key for stopping. If one wishes to enter Error log Mode, parameter setting mode or some other mode where the truck is inactivated one of the signal buttons is depressed at the same time as the green button is depressed or after entered authority verification code. The signal buttons are easy to reach even with the handle turned upward since they are located on the side of the control panel.

The keys of the keyboard may be provided with light emitting diodes that are lit when they have been depressed so that a receipt is obtained for the depressing, alternatively a row of light emitting diodes may be used as confirmation. The keys may be so called touch-keys or membrane keys.

The invention is not limited to the above embodiment but may be varied within the frame of the appended claims.

## Claims

1. Method for parameter setting at a truck, in particular tiller truck, the truck in addition to a work mode having at least one check and/or programming mode **characterized in that** truck control actuators (12, 7, 8) that are used in the work mode are used for checking, programming or setting of parameters and **in that** the work functions are inhibited when it is in programming mode.

2. Method according to claim 1, **characterized in that** the drive control (7, 8) and the signal control (12) are used in the programming mode.

3. Method according to claim 2, **characterized in that** both activation directions of the drive control is used in the programming mode

4. Method according to any of the preceding claims, **characterized in that** the switch between programming mode and work mode is by the truck being shut off.

5. Method according to any of the preceding claims, **characterized in that** the programming mode is switched on by the signal control (12) being activated at the same time as the truck is switched on.

6. Truck comprising truck control actuators (12, 7, 8) for the executing of the method in claim 1, wherein the truck is operable in a work mode and in a check and/or programming mode, **characterized in that** the truck control actuators (12, 7, 8) that are used in the work mode are also used for setting parameters or programming.

7. Truck according to claim 6, **characterized in that** a display (13) is arranged in the handle for the showing of for instance codes, and/or parameter values and that the logic circuit of the truck is arranged in the handle, preferably with the display in direct proximity thereof.

8. Truck according to claim 6, **characterized in that** the drive control actuators (7, 8) include discrete sensor elements (18), in particular contact free, and that two of these, in particular one corresponding to movement away from the operator and one corresponding to movement towards the operator when in programming mode are coupled or programmed for instance for a stepping forward and rearward respectively of parameter values.

## Patentansprüche

1. Verfahren zum Setzen von Parametern an einem Hubwagen (Truck), insbesondere einem Hubwagen mit Deichsel (Tiller Truck), wobei der Hubwagen zusätzlich zu einem Arbeitsmodus mindestens einen Prüf- und/oder Programmiermodus aufweist,
**dadurch gekennzeichnet, dass**
im Arbeitsmodus verwendete Hubwagensteuerungs-Bedienelemente (12, 7, 8) auch zum Prüfen, Programmieren oder Setzen von Parametern verwendet werden, und
die Arbeitsfunktionen deaktiviert sind, wenn der Hubwagen auf einen Programmiermodus eingestellt ist.

2. Verfahren nach Anspruch 1, **dadurch gekennzeichnet, dass** im Programmiermodus die Antriebssteuerung (7, 8) und die Signalsteuerung (12) verwendet werden.

3. Verfahren nach Anspruch 2, **dadurch gekennzeichnet, dass** im Programmiermodus beide Aktivierungsrichtungen der Antriebssteuerung verwendet werden.

4. Verfahren nach einem der vorangehenden Ansprüche, **dadurch gekennzeichnet, dass** zwischen dem Programmiermodus und dem Arbeitsmodus umgeschaltet wird, indem der Hubwagen ausgeschaltet wird.

5. Verfahren nach einem der vorangehenden Ansprüche, **dadurch gekennzeichnet, dass** der Programmiermodus eingeschaltet wird, indem die Signalsteuerung (12) aktiviert wird, während gleichzeitig der Hubwagen eingeschaltet wird.

6. Hubwagen mit Hubwagensteuerungs-Bedienelementen (12, 7, 8) zum Ausführen des Verfahrens nach Anspruch 1, wobei der Hubwagen in einem Arbeitsmodus und in einem Prüf- und/oder Programmiermodus betreibbar ist, **dadurch gekennzeichnet, dass** die im Arbeitsmodus verwendeten Hubwagensteuerungs-Bedienelemente (12, 7, 8) auch zum Setzen von Parametern oder zum Programmieren verwendet werden.

7. Hubwagen nach Anspruch 6, **dadurch gekennzeichnet, dass**
ein Display (13) zum Darstellen z. B. von Codes und/oder Parameterwerten im Handgriff angeordnet ist, und
die Logikschaltung des Hubwagens im Handgriff angeordnet ist, wobei das Display vorzugsweise in unmittelbarer Nähe der Logikschaltung angeordnet ist.

8. Hubwagen nach Anspruch 6, **dadurch gekennzeichnet, dass** die Antriebssteuerungs-Bedienelemente (7, 8) diskrete, insbesondere kontaktfreie Sensorelemente (18) aufweisen, und
zwei dieser Sensorelemente, insbesondere ein Sensorelement, das einer Bewegung von der Bedienungsperson weg zugeordnet ist, und ein Sensorelement, das einer Bewegung zur Bedienungsperson hin zugeordnet ist, im Programmiermodus z. B. zum schrittweisen Erhöhen bzw. Vermindern von Parameterwerten gekoppelt oder programmiert sind.

## Revendications

1. Procédé de détermination de paramètre pour un chariot, en particulier un chariot à barre, le chariot ayant, en plus d'un mode de travail, au moins un mode de vérification et/ou de programmation, **caractérisé en ce que** des actionneurs de commande de chariot (12, 7, 8) qui sont utilisés dans le mode de travail sont utilisés pour vérifier, programmer ou déterminer des paramètres, et **en ce que** les fonctions de travail sont interdites lorsqu'il est dans le mode de programmation.

2. Procédé selon la revendication 1, **caractérisé en ce que** la commande d'entraînement (7, 8) et la commande de signal (12) sont utilisées dans le mode de programmation.

3. Procédé selon la revendication 2, **caractérisé en ce que** les deux directions d'activation de la commande d'entraînement sont utilisées dans le mode de programmation.

4. Procédé selon l'une quelconque des revendications précédentes, **caractérisé en ce que** la commutation entre le mode de programmation et le mode de travail s'effectue par l'arrêt du chariot.

5. Procédé selon l'une quelconque des revendications précédentes, **caractérisé en ce que** le mode de programmation est activé par le fait que la commande de signal (12) est activée simultanément à la mise en marche du chariot.

6. Chariot comprenant des actionneurs de commande de chariot (12, 7, 8) pour l'exécution du procédé selon la revendication 1, dans lequel le chariot peut être mis en oeuvre dans un mode de travail et dans un mode de vérification et/ou de programmation, **caractérisé en ce que** les actionneurs de commande de chariot (12, 7, 8) qui sont utilisés dans le mode de travail sont également utilisés pour déterminer des paramètres ou une programmation.

7. Chariot selon la revendication 6, **caractérisé en ce qu'**un afficheur (13) est agencé dans la poignée pour la présentation, par exemple, de codes, et/ou de valeurs de paramètres, et **en ce que** le circuit logique du chariot est agencé dans la poignée, de préférence avec l'afficheur à proximité immédiate de celui-ci.

8. Chariot selon la revendication 6, **caractérisé en ce que** les actionneurs de commande d'entraînement (7, 8) comprennent des éléments de détection discrets (18), en particulier sans contact, et **en ce que** deux de ceux-ci, en particulier un correspondant au mouvement à l'opposé de l'opérateur et un correspondant au mouvement vers l'opérateur dans le mode de programmation, sont couplés ou programmés, par exemple, pour une modification en avant et en arrière, respectivement, de valeurs de paramètres.
